# EUROPÄISCHE PATENTSCHRIFT

(11) **EP 1 799 514 B1**
(45) Veröffentlichungstag und Bekanntmachung des Hinweises auf die Patenterteilung: **09.01.2008**
(21) Anmeldenummer: 05801878.9
(22) Anmeldetag: 12.10.2005
(51) Int. Cl.: B60R 15/04, B61D 35/00, B63B 29/00, B64D 11/02, E03F 1/00, E03D 5/00, A47K 11/00

(54) **VAKUUMTOILETTE FÜR FAHRZEUGE**
VACUUM TOILET FOR VEHICLES
TOILETTES A VIDE DESTINEES A DES VEHICULES

(30) Priorität: 13.10.2004 DE 102004049823
(43) Veröffentlichungstag der Anmeldung: 27.06.2007
(73) Patentinhaber: EVAC GmbH, 22880 Wedel (DE)
(72) Erfinder: WÖRMCKE, Hans, 25492 Heist (DE)
(74) Vertreter: Glaeser, Joachim
(86) Internationale Anmeldenummer: PCT/EP2005/010963
(87) Internationale Veröffentlichungsnummer: WO 2006/040138

(56) Entgegenhaltungen:
- EP-A- 1 293 614
- DE-A1- 4 309 050
- US-A- 4 357 719
- US-A1- 2002 069 459

## Beschreibung

Die Erfindung bezieht sich auf eine Vakuumtoilette für Fahrzeuge, aufweisend ein WC-Becken mit Brille und Deckel sowie aufweisend Funktionselemente für die Zufuhr von Spülwasser für die Erzeugung und den Einsatz von Vakuum, für den Einsatz von Druckluft zur Vakuumerzeugung, für den Einsatz von elektrischer Energie sowie für eine Programmsteuerungseinheit sowie Steuerelemente und Sensoren, Betätigungselemente, Indikatoren und dergleichen wobei alle Elemente als Module oder als selbstständige Bauelemente ausgebildet und mit Buchsen-/Stecker-Verbindungselementen zur elektrischen Verbindung mit Signal- und Energieleitern ausgebildet sind.

Eine derartige Vakuumtoilette ist als nächstliegender Stand der Technik bekannt (EP 1 293 614 A).
Vakuumtoiletten, wie sie heutzutage in Schienenfahrzeugen eingebaut werden, weisen eine komplexe Verdrahtung der Steuerelemente, Sensoren, Druckknöpfe und Indikatoren auf. Dies bedeutet eine spezielle projektbezogene Ausgestaltung der Programmsteuerung und erfordert für jedes einzelne Projekt viel Ingenieursarbeit. Auch haben bekannte Einrichtungen den Nachteil, wenn der Betreiber beispielsweise irgendwelche Änderungen vornehmen will, da er in diesem Fall auf Originalteile angewiesen ist oder auf solche Elemente angewiesen ist, die nun wiederum kompatibel sein müssen. Dies bedeutet, dass er für das Auswechseln mit relativ langen Zeiten rechnen muss, die sich dadurch ergeben, dass bestimmte Elemente bestellt und angeliefert werden müssen. Auch Neuerungen lassen sich daher an bereits bestehenden Einrichtungen nur schlecht realisieren.

Hier setzt die Erfindung an und will die Aufgabe lösen, den erforderlichen Aufwand bei der Erstellung, im Service und auch bei der Erweiterung von Vakuumtoiletten zu verbessern.

Erreicht wird dies dadurch, dass bei einer Vakuumtoilette der eingangs genannten Art die Programmsteuereinheit lediglich mit einem der Elemente verbunden ist und dass jeweils einander benachbarte Elemente miteinander verbunden sind und Steuersignale empfangen und darauf ansprechen oder diese an andere Elemente weiterleiten.

Die einzelnen Elemente einer Vakuumtoilette werden für sich selbständig so aufgebaut, dass lediglich einfache Kontaktverbindungen erforderlich sind, wobei die entsprechenden Leiter nicht zu einer Verteilung oder dergleichen geführt werden müssen, sondern lediglich zu irgendeinem benachbarten Element. Wenn also beispielsweise Druckluft zur Erzeugung von Vakuum eingesetzt werden soll, so gelangt das entsprechende Signal von dem Controller oder der Programmsteuerung nicht unbedingt direkt zu dem Vakuumerzeuger, sondern zu irgendeinem anderen Funktions- oder Steuerelement, also beispielsweise dem Steuerelement für die Zufuhr von Spülwasser in das WC-Becken. Diese Einheit kann mit dem entsprechenden Signal "nichts anfangen" und gibt es weiter, bis es auf irgendeinem Wege zum Vakuumerzeuger gelangt, der die entsprechende Funktion dann ausübt. In gleicher Weise wird mit allen anderen Elementen der Steuerung verfahren und dies bringt dann mit sich, dass, wenn irgendeines der Elemente defekt geworden ist, dieses auf einfachstem Wege ausgetauscht werden kann, indem es entfernt wird und die elektrische Verbindung zu einem benachbarten Element hergestellt wird. In gleicher Weise kann verfahren werden, um einen Fehler in der Anlage zu ermitteln oder aber um ein vorhandenes Element durch ein neuartiges Element zu ersetzen.

Bislang mussten die einzelnen Elemente einer Vakuumtoilette über einen komplizierten Verdrahtungsplan mit einem allgemeinen Verteiler verbunden werden und erhielten die entsprechenden Signale und Energien direkt von der zugehörigen Programmsteuerung.

Im Zusammenhang mit der Erfindung können Standardmodule mit Standard-Interface eingesetzt werden, beispielsweise CAN-Elemente. Entsprechendes gilt für die Datensignale und die Energieversorgung und dies führt letztendlich dazu, dass lediglich eine einzige Hauptsteuerung (Master Controller) erforderlich ist. Wird also beispielsweise eine Vakuumtoilette gemäß der Erfindung installiert, so müssen lediglich wenige Leitungen aus der Toiletteneinheit heraus hinter die Verkleidung bzw. Vertäfelung des Toilettenraumes geführt werden, um sie an die Energieversorgung anzuschließen.

Im Zusammenhang mit der vorliegenden Erfindung können Standardkabel mit identischen Verbindungselementen eingesetzt werden, und diese Kabel können auf die gewünschte Länge vorgefertigt werden. Die einzelnen Module können als Standardmodule hergestellt, auf Lager gehalten und auch den Betreibern kurzfristig zur Verfügung gestellt werden, da sie so ausgebildet sind, dass sie mit der bisherigen Anlage kompatibel sind. Da es dann auch nicht mehr darauf ankommt, wo ein ersetztes Element angeschlossen wird, können auch keine Fehler bei Nachbesserungsarbeiten auftreten, die bislang denkbar waren, wenn die Verdrahtung nicht vorschriftsgemäß erfolgte.

## Patentansprüche

1. Vakuumtoilette für Fahrzeuge, aufweisend ein WC-Becken mit Brille und Deckel sowie aufweisend Funktionselemente für die Zufuhr von Spülwasser für die Erzeugung und den Einsatz von Vakuum, für den Einsatz von Druckluft zur Vakuumerzeugung, für den Einsatz von elektrischer Energie, eine Programmsteuereinheit sowie Steuerelemente, Sensoren, Betätigungselemente und Indikatoren, wobei alle Elemente als Module oder als selbstständige Bauelemente ausgebildet und mit Buchsen-/Stecker-Verbindungselementen zur elektrischen Verbindung mit Signal- und Energieleitern ausgebildet sind, **dadurch gekennzeichnet, dass** die Programmsteuereinheit lediglich mit einem der Elemente verbunden ist und dass jeweils einander benachbarte Elemente miteinander verbunden sind und Steuersignale empfangen und darauf ansprechen oder diese an andere Elemente weiterleiten.

## Claims

1. Vacuum toilet for vehicles comprising a toilet bowl with seat and lid as well as comprising functional elements for the supply of rinse water for the production and the application of vacuum, for the application of pressurised air for vacuum production, for the application of electric energy, a program control unit as well as control elements, sensors, operating elements and indicators, wherein all elements are formed as modules or as independent components, and are formed with female/male connecting elements for electric connection with signal and energy conductors, **characterised in that** the program control unit is connected to only one of the elements, and that elements adjacent to each other are connected with each other and receive control signals and react thereto or forward these to other elements.

## Revendications

1. Toilettes par aspiration pour véhicules comportant une cuvette de WC avec une lunette et un couvercle, et, des éléments fonctionnels pour amener l'eau de rinçage, pour la production et l'utilisation du vide, pour l'utilisation d'air sous pression en vue de la production du vide, pour l'utilisation d'énergie électrique, ainsi qu'une unité de commande à programme et des éléments de commande, des palpeurs, des éléments d'actionnement, des indicateurs, étant précisé que tous ces éléments soit forment des modules de construction, soit constituent des éléments de construction indépendants et sont équipés de prises femelles / prises mâles / éléments de connexion pour permettre la connexion électrique avec des conducteurs de signaux ou d'énergie, **caractérisées en ce que** l'unité de commande à programme est reliée uniquement à l'un desdits éléments et que des éléments adjacents sont reliés les uns aux autres et reçoivent des signaux de commande auxquels ils répondent ou qu'ils transmettent à d'autres éléments.
